(19) Europäisches Patentamt
European Patent Office
Office européen des brevets

(11) **EP 2 185 375 B1**

(12) **FASCICULE DE BREVET EUROPEEN**

(45) Date de publication et mention de la délivrance du brevet:
**04.05.2011 Bulletin 2011/18**

(21) Numéro de dépôt: **08829018.4**

(22) Date de dépôt: **11.07.2008**

(51) Int Cl.:
**B60K 31/00** *(2006.01)*   **B60K 31/18** *(2006.01)*
**B60W 30/16** *(2006.01)*   **B60W 30/14** *(2006.01)*

(86) Numéro de dépôt international:
**PCT/FR2008/051315**

(87) Numéro de publication internationale:
**WO 2009/030845 (12.03.2009 Gazette 2009/11)**

(54) **PROCÉDÉ ET DISPOSITIF DE CONTRÔLE DU FONCTIONNEMENT D'UN RÉGULATEUR DE VITESSE DE VÉHICULE AUTOMOBILE**

VERFAHREN UND VORRICHTUNG ZUR STEUERUNG DES BETRIEBS EINES GESCHWINDIGKEITSREGLERS FÜR EIN AUTOMOBIL

METHOD AND DEVICE FOR CONTROLLING THE OPERATION OF CRUISE CONTROL FOR AN AUTOMOBILE

(84) Etats contractants désignés:
**AT BE BG CH CY CZ DE DK EE ES FI FR GB GR HR HU IE IS IT LI LT LU LV MC MT NL NO PL PT RO SE SI SK TR**

(30) Priorité: **31.08.2007 FR 0757300**

(43) Date de publication de la demande:
**19.05.2010 Bulletin 2010/20**

(73) Titulaire: **Peugeot Citroën Automobiles SA**
**78140 Vélizy-Villacoublay (FR)**

(72) Inventeur: **SERVEL, Alain**
**F-78350 Jouy En Josas (FR)**

(74) Mandataire: **Vigand, Régis Louis Michel**
**Peugeot Citroën Automobiles SA**
**Propriété Industrielle - LG081**
**18 Rue des Fauvelles**
**92250 La Garenne Colombes (FR)**

(56) Documents cités:
**EP-A- 1 504 948**   **WO-A-03/080384**
**DE-A1-102005 036 924**   **US-A1- 2001 014 845**
**US-A1- 2001 027 371**

• **WINNER ET AL: "Adaptive Cruise Control System Aspects and Development Trends" SAE TRANSACTIONS, SOCIETY OF AUTOMOTIVE ENGINEERS, INC., WARRENDALE, PA, US, vol. 105, no. 961010, 1996, pages 1412-1421, XP002124577 ISSN: 0096-736X**

**Description**

L'invention concerne les régulateurs de vitesse de véhicule automobile.

Certains véhicules automobiles sont équipés d'un régulateur de vitesse qui permet de les maintenir à une vitesse de consigne définie par le conducteur. En présence d'une limitation de vitesse imposée par la législation d'un pays, les conducteurs choisissent fréquemment la vitesse maximale légale comme vitesse de consigne. En théorie, cela est avantageux car cela favorise la fluidité du trafic, notamment sur autoroute. Mais, dans la pratique on s'aperçoit que les véhicules ne disposent ni de calibrations de vitesse identiques, ni de précisions de vitesse identiques, si bien que malgré une même vitesse de consigne ils ont tendance à se rapprocher ou à s'éloigner progressivement.

Lorsque deux véhicules se rapprochent pour la raison invoquée ci-avant ou du fait qu'ils n'ont pas les mêmes vitesses de consigne, le conducteur du véhicule suiveur doit, s'il veut respecter une distance inter-véhicules convenable, réduire manuellement la vitesse de consigne, ou bien déboîter (ce qui l'oblige à accélérer afin de dépasser rapidement le véhicule qui précède et donc à dépasser la vitesse maximale autorisée), ou encore freiner (ce qui désactive le régulateur de vitesse). En outre, il est difficile pour le conducteur du véhicule suiveur de déterminer quand la distance inter-véhicules n'est plus suffisante à sa sécurité. En effet, la distance inter-véhicules minimale dépend principalement de la vitesse des véhicules, de l'état de surface de la route et des capacités de freinage des véhicules. En raison de cette difficulté, certains pays ont imposé, ou sont sur le point d'imposer, un temps inter-véhicules (ou TIV) minimal correspondant à la vitesse maximale autorisée.

Ce TIV étant également difficile à estimer et donc à respecter, il a été proposé, notamment dans le document brevet FR 2888536, de limiter le temps inter-véhicules et la vitesse du véhicule suiveur, afin d'empêcher le conducteur de ce dernier de suivre de trop près le véhicule qui le précède. Pour ce faire, on estime le temps inter-véhicules par le calcul, à partir de la distance inter-véhicules et de la vitesse du véhicule suiveur, puis on compare ce temps inter-véhicules estimé à une valeur de temps inter-véhicules de référence, et on compare la vitesse instantanée du véhicule suiveur à une valeur de vitesse de référence, et enfin on limite le couple du moteur du véhicule suiveur dès que le temps inter-véhicules estimé atteint la valeur du temps inter-véhicules de référence et/ou que la vitesse du véhicule suiveur atteint la vitesse de référence. EP 1504 948 montre toutes les caractéristiques du préambule de la revendication 1.

L'invention propose d'opérer différemment, et plus précisément de moduler la vitesse de consigne du régulateur de vitesse de sorte qu'un temps inter-véhicules de consigne (ou de référence) soit respecté.

Elle propose à cet effet un procédé, dédié au contrôle du fonctionnement d'un régulateur de vitesse d'un premier véhicule, et consistant :

- à estimer la distance inter-véhicules séparant le premier véhicule d'un second véhicule qui le précède et la vitesse du second véhicule,
- à calculer une correction de vitesse à apporter à une vitesse de consigne du régulateur de vitesse en fonction au moins de cette vitesse de consigne, d'un temps inter-véhicules de consigne, de la distance inter-véhicules estimée et de la vitesse estimée du second véhicule, et
- à délivrer pour le régulateur de vitesse une vitesse de consigne corrigée en fonction de ladite correction de vitesse calculée après avoir calculé la correction de vitesse on la compare à un intervalle limité par des bornes inférieure et supérieure choisies, et lorsque la correction de vitesse est inférieure à la borne inférieure on la remplace par cette borne inférieure, tandis que lorsque la correction de vitesse est supérieure à la borne supérieure on la remplace par cette borne supérieure. L'intervalle limité est inférieur ou égal à 30 km/h, voire à 20 km/h.
  ➢ la borne inférieure peut avantageusement être égale à environ -20 km/h et la borne supérieure peut avantageusement être égale à 0 km/h ; dans ce dernier cas, le véhicule porteur ne peut que freiner et non accélérer par rapport au suivi d'une vitesse de consigne, ce qui améliore la sécurité.

Le procédé selon l'invention peut comporter d'autres caractéristiques qui peuvent être prises séparément ou en combinaison, et notamment :

- on peut calculer une distance inter-véhicules de consigne en fonction du temps inter-véhicules de consigne et de la vitesse du premier véhicule. Dans ce cas, on peut calculer la correction de vitesse en fonction au moins de la vitesse de consigne, de la distance inter-véhicules de consigne, de la distance inter-véhicules estimée et de la vitesse estimée du second véhicule ;
- on peut calculer la correction de vitesse en fonction, également, d'un paramètre de décélération représentatif de l'aptitude du régulateur de vitesse à faire varier la vitesse du premier véhicule ;

- on peut calculer la correction de vitesse au moyen de la formule

$$CV = VI2 - VC + Signe(DIV - DIC) * \sqrt{2 * Gm * |DIV - DIC|}$$ ; avec DIV la distance inter-véhicules séparant ledit premier véhicule (VA1) d'un second véhicule qui le précède (VA2), VI2 la vitesse dudit second véhicule (VA2), CV la correction de vitesse à apporter à VC la vitesse de consigne dudit régulateur de vitesse (RV), DIC la distance inter-véhicule de consigne, Gm paramètre de décélération.

Cette option préférentielle est particulièrement intéressante, car elle limite la correction de vitesse à un intervalle limité, de préférence relativement réduit, en termes de plage de correction de vitesse pour maintenir une distance de sécurité ou un temps inter-véhicule adapté. Cet intervalle limité est plus réduit que l'intervalle de fonctionnement du système d'aide à la conduite.

Dans certains arts antérieurs connus, le système d'aide à la conduite montre une plage de fonctionnement allant de 30 km/h à 150 km/h max. Dans d'autres arts antérieurs, cette plage peut aller même de 0km/h à 150 km/h ou plus, dans le cas d'un système d'aide à la conduite dit "Stop & Go". A l'intérieur de cette plage de fonctionnement, le système d'aide à la conduite peut automatiquement moduler la consigne de vitesse sans autre limite de plage de vitesse, afin de garantir au mieux le maintien de la distance ou du temps inter-véhicule selon une cible réglée par le conducteur.

C'est-à-dire que, lorsque le conducteur a réglé une consigne de vitesse (par exemple 130 km/h), et que son véhicule porteur suit un véhicule cible qui le précède et qui ralentit progressivement, le système d'aide à la conduite peut alors adapter la vitesse du véhicule porteur en fonction de celle du véhicule cible, jusqu'à atteindre la limite de la plage de fonctionnement, soit 30 km/h pour un système d'aide à la conduite classique ou jusqu'à l'arrêt pour un système d'aide à la conduite du type « ACC Stop & Go », afin de respecter le temps ou la distance inter-véhicule.

Une conséquence de ce type de fonctionnement est la suivante : si le conducteur roule avec une consigne de vitesse programmée élevée, par exemple à 130km/h, derrière un véhicule cible roulant beaucoup plus lentement, par exemple 50 km/h, et que ce véhicule cible est amené à disparaître de la vision du radar du véhicule porteur, par exemple lorsque le conducteur quitte la voie au niveau d'une sortie d'autoroute), ou bien lorsque le véhicule cible disparaît car c'est lui qui quitte la voie, ou bien encore lorsque le radar perd momentanément le véhicule cible, lors de la traversée d'un tunnel ou dans un virage, alors le véhicule porteur va accélérer sans action du conducteur, pour aller de la vitesse actuelle, ici 50 km/h, jusqu'à la consigne mémorisée, ici 130km/h. Cette réaccélération peut, dans beaucoup de cas, surprendre le conducteur, et être dangereuse.

L'option préférentielle d'un intervalle limité de correction permet d'améliorer le fonctionnement du système d'aide à la conduite, dans le sens où la vitesse n'est corrigée au maximum que d'une quantité limitée, par exemple pas plus de 20 km/h. Ainsi, dans l'exemple ci-dessus, le système d'aide à la conduite n'aura diminué la vitesse qu'à 110 km/h; et donc en cas de perte du véhicule cible, le véhicule porteur ne pourra jamais réaccélérer de plus de 20 km/h sans action du conducteur, ce qui limite fortement la surprise qui peut être causée au conducteur.

De façon plus générale, l'innovation préférentielle décrite, tout en offrant plus de souplesse d'utilisation qu'un simple régulateur de vitesse, en permettant d'adapter la consigne de vitesse pour maintenir une certaine distance de sécurité ou un certain temps inter véhicules, permet également de moins "déresponsabiliser" le conducteur qu'un passage au système d'aide à la conduite maintenant une distance inter véhicules ou un temps inter véhicules sans référence à aucune vitesse de consigne, en limitant l'amplitude autorisée de correction de vitesse, obligeant ainsi le conducteur à plus de vigilance notamment lorsque les écarts de vitesse entre véhicule porteur et véhicule cible sont plus importants.

- lorsque le second véhicule n'est plus placé devant le premier véhicule, on peut diminuer progressivement la correction de vitesse jusqu'à une valeur nulle ;

- lorsque la distance inter-véhicule devient supérieure à un seuil donné, on peut diminuer progressivement ladite correction de vitesse jusqu'à une valeur nulle ;

- lorsque la différence entre la vitesse du second véhicule (V12) et la vitesse (VI1) du premier véhicule devient supérieure à un seuil donné, on peut diminuer progressivement ladite correction de vitesse (CV) jusqu'à une valeur nulle ;

- après avoir calculé une première correction de vitesse consécutivement à l'apparition du second véhicule devant le premier véhicule, on peut délivrer successivement au régulateur de vitesse des vitesses de consigne dont la correction augmente progressivement jusqu'à atteindre la valeur de la première correction de vitesse ;

- on peut estimer la vitesse du second véhicule à partir de la vitesse du premier véhicule et d'une valeur représentative de la vitesse relative du second véhicule par rapport au premier véhicule ;

- on peut autoriser l'activation du régulateur de vitesse lorsqu'il n'y a pas de second véhicule devant le premier véhicule ou qu'un second véhicule est placé devant le premier véhicule et, d'une part, que la vitesse estimée du second véhicule est supérieure à la différence entre la vitesse de consigne et une vitesse seuil choisie, et d'autre part, que le temps inter-véhicules est supérieur à un temps seuil choisi ;
  ➢ en présence d'un second véhicule placé devant le premier véhicule, on peut autoriser l'activation du régulateur de vitesse si, en outre, le temps inter-véhicules n'est pas inférieur au temps inter-véhicules de consigne pendant plus d'une durée seuil choisie ; ou encore si l'on prévoit que le temps inter-véhicules ne restera pas inférieur au temps inter-véhicules de consigne pendant plus d'une durée seuil choisie ;
  ➢ en présence d'un second véhicule placé devant le premier véhicule, on peut autoriser l'activation du régulateur de vitesse si, en outre, le temps inter-véhicules n'est pas inférieur à un temps inter-véhicules de sécurité pendant plus d'une durée seuil choisie ; ou encore si l'on prévoit que le temps inter-véhicules ne restera pas inférieur à un temps inter-véhicules de sécurité pendant plus d'une durée seuil choisie ;

- lorsque le régulateur de vitesse est activé et qu'un second véhicule apparaît devant le premier véhicule avec une vitesse estimée inférieure à la vitesse de consigne, on peut désactiver le régulateur de vitesse lorsque la vitesse estimée du second véhicule est inférieure à la différence entre la vitesse de consigne et une vitesse seuil choisie et/ou que le temps inter-véhicules est inférieur à un temps seuil choisi et/ou que le temps inter-véhicules est inférieur au temps inter-véhicules de consigne pendant plus d'une durée seuil choisie ; ou encore que l'on prévoit que la vitesse estimée du second véhicule restera inférieure à la différence entre la vitesse de consigne et une vitesse seuil choisie et/ou que le temps inter-véhicules restera inférieur à un temps seuil choisi et/ou que le temps inter-véhicules restera inférieur au temps inter-véhicules de consigne pendant plus d'une durée seuil choisie.

- on peut informer le conducteur du premier véhicule (VA1) lorsque la correction de vitesse (CV) est différente de zéro.

- on peut alerter le conducteur du premier véhicule (VA1) lorsque le régulateur de vitesse (RV) est désactivé automatiquement.

- on peut informer le conducteur du premier véhicule (VA1) lorsque l'activation du régulateur de vitesse (RV) n'est pas autorisée.

L'invention propose également un dispositif, dédié au contrôle du fonctionnement d'un régulateur de vitesse d'un premier véhicule, et comprenant des moyens de traitement chargés :

- de calculer une correction de vitesse à apporter à une vitesse de consigne du régulateur de vitesse en fonction au moins de cette vitesse de consigne, d'un temps inter-véhicules de consigne, d'une estimation de la distance inter-véhicules séparant le premier véhicule d'un second véhicule qui le précède et d'une estimation de la vitesse du second véhicule, et
- de délivrer pour le régulateur de vitesse une vitesse de consigne corrigée en fonction de la correction de vitesse calculée.

Le dispositif selon l'invention peut comporter d'autres caractéristiques qui peuvent être prises séparément ou en combinaison, et notamment :

- ses moyens de traitement peuvent être chargés de calculer une distance inter-véhicules de consigne en fonction du temps inter-véhicules de consigne et de la vitesse du premier véhicule, et de calculer la correction de vitesse en fonction au moins de la vitesse de consigne, de la distance inter-véhicules de consigne, de la distance inter-véhicules estimée et de la vitesse estimée du second véhicule ;
- ses moyens de traitement peuvent être chargés de calculer la correction de vitesse en fonction, également, d'un paramètre de décélération représentatif de l'aptitude du régulateur de vitesse à faire varier la vitesse du premier véhicule ;
- ses moyens de traitement peuvent être chargés de calculer la correction de vitesse par exemple au moyen de la formule

$$ CV = VI2 - VC + Signe(DIV - DIC) * \sqrt{2 * Gm * |DIV - DIC|} \; ; $$

- après avoir calculé la correction de vitesse ses moyens de traitement peuvent être chargés de comparer cette correction de vitesse à un intervalle limité par des bornes inférieure et supérieure choisies, et, lorsque la correction de vitesse est inférieure à la borne inférieure, de remplacer la correction de vitesse par cette borne inférieure, et lorsque la correction de vitesse est supérieure à la borne supérieure de remplacer la correction de vitesse par cette borne supérieure ;

- lorsque le second véhicule n'est plus placé devant le premier véhicule, ses moyens de traitement peuvent être chargés de diminuer progressivement la correction de vitesse jusqu'à une valeur nulle ;
- après avoir calculé une première correction de vitesse consécutivement à l'apparition du second véhicule devant le premier véhicule, ses moyens de traitement peuvent être chargés de délivrer successivement au régulateur de vitesse des vitesses de consigne dont la correction augmente progressivement jusqu'à atteindre la valeur de la première correction de vitesse ;
- ses moyens de traitement peuvent être chargés d'estimer la vitesse du second véhicule à partir de la vitesse du premier véhicule et d'une valeur représentative de la vitesse relative du second véhicule par rapport au premier véhicule ;
- il peut comprendre des moyens de contrôle d'activation chargés d'autoriser l'activation du régulateur de vitesse soit lorsqu'il n'y a pas de second véhicule devant ledit premier véhicule, soit lorsqu'un second véhicule est placé devant le premier véhicule et, d'une part, que la vitesse estimée du second véhicule est supérieure à la différence entre la vitesse de consigne et une vitesse seuil choisie, et d'autre part, que le temps inter-véhicules est supérieur à un temps seuil choisi ;
  ➢ en présence d'un second véhicule placé devant le premier véhicule, les moyens de contrôle d'activation peuvent être chargés d'autoriser l'activation du régulateur de vitesse si, en outre, le temps inter-véhicules n'est pas inférieur au temps inter-véhicules de consigne pendant plus d'une durée seuil choisie ;
  ➢ les moyens de contrôle d'activation peuvent être chargés, lorsque le régulateur de vitesse est activé et qu'un second véhicule apparaît devant le premier véhicule avec une vitesse estimée inférieure à la vitesse de consigne, de désactiver le régulateur de vitesse lorsque la vitesse estimée du second véhicule est inférieure à la différence entre la vitesse de consigne et une vitesse seuil choisie et/ou que le temps inter-véhicules est inférieur à un temps seuil choisi et/ou que le temps inter-véhicules est inférieur au temps inter-véhicules de consigne pendant plus d'une durée seuil choisie.

L'invention propose également un régulateur de vitesse, pour un véhicule automobile, comprenant un dispositif de contrôle du type de celui présenté ci-avant.

D'autres caractéristiques et avantages de l'invention apparaîtront à l'examen de la description détaillée ci-après, et des dessins annexés, sur lesquels :

- la figure 1 illustre de façon schématique et fonctionnelle un premier véhicule automobile suivant un second véhicule automobile et muni d'un régulateur de vitesse comportant un exemple de réalisation de dispositif de contrôle selon l'invention, et

- la figure 2 est un diagramme bloc illustrant un exemple de fonctionnement d'un dispositif de contrôle selon l'invention.

Les dessins annexés pourront non seulement servir à compléter l'invention, mais aussi contribuer à sa définition, le cas échéant.

L'invention a pour but de contrôler la vitesse de consigne d'un régulateur de vitesse de véhicule automobile afin que ce dernier respecte un temps inter-véhicules de consigne.

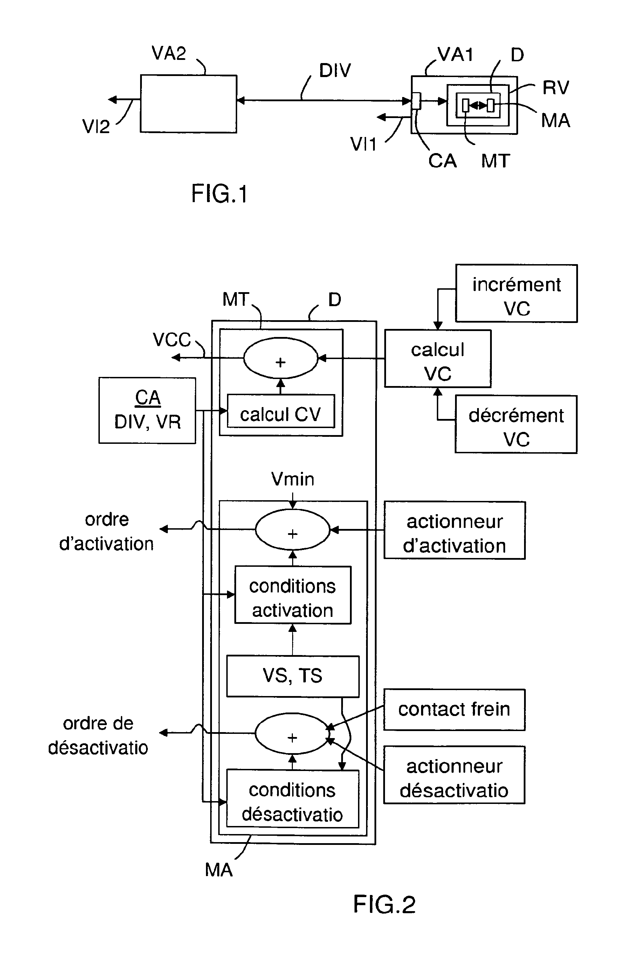

On a schématiquement représenté sur la figure 1 un premier véhicule VA1 équipé d'un régulateur de vitesse RV comprenant un dispositif D, selon l'invention, destiné à contrôler son fonctionnement. Il est rappelé qu'un régulateur de vitesse RV est généralement implanté dans le calculateur du moteur d'un véhicule automobile et qu'il est chargé de moduler l'accélération et/ou le freinage de ce véhicule automobile de sorte que la vitesse de ce dernier soit sensiblement égale à une vitesse de consigne VC définie par son conducteur au moyen d'un actionneur d'activation (voir figure 2).

Dans l'exemple illustré, le dispositif D fait partie intégrante du régulateur de vitesse RV, mais il pourrait être externe à ce dernier tout en étant couplé à celui-ci.

Par convention, on appelle ci-après « premier véhicule VA1 » un véhicule automobile qui roule à la vitesse VI1, qui dispose d'un régulateur de vitesse RV et qui suit un second véhicule VA2 qui le précède et qui roule à la vitesse V12.

Comme cela est illustré sur la figure 2, un dispositif D, selon l'invention, comprend au moins un module de traitement MT. Ce dernier est tout d'abord chargé, lorsque le régulateur de vitesse RV est activé, de calculer, par exemple périodiquement, une correction de vitesse CV devant être apportée à la vitesse de consigne VC du régulateur de vitesse RV, laquelle est définie par le conducteur et peut être incrémentée ou décrémentée à tout moment (généralement au moyen d'un levier de commande ou de boutons de commande).

Le calcul précité se fait au moins en fonction de la vitesse de consigne VC, d'un temps inter-véhicules de consigne TC, de l'estimation de la distance inter-véhicules DIV qui sépare le premier véhicule VA1 d'un second véhicule qui le précède VA2 et de l'estimation de la vitesse VI2 du second véhicule VA2.

L'estimation de la distance inter-véhicules DIV est fournie par un capteur de télémétrie CA implanté dans au moins un endroit choisi du premier véhicule VA1 et orienté vers l'avant de ce dernier. Ce capteur de télémétrie CA peut se présenter sous n'importe quelle forme connue de l'homme de l'art. Ainsi, il pourra s'agir d'une caméra, par exemple implantée en haut du pare-brise, ou d'un radar (ou lidar), par exemple implanté dans le pare-choc avant ou dans la calandre.

Ce capteur de télémétrie CA fournit également une estimation de la vitesse relative VR du second véhicule VA2 par rapport au premier véhicule VA1 (ou l'inverse). On notera qu'au lieu de fournir la vitesse relative VR, il pourrait fournir l'estimation de la vitesse VI2 du second véhicule VA2. Mais, cela nécessite qu'il connaisse la vitesse VI1 du premier véhicule VA1 (celle-ci est déterminée par un calculateur embarqué et fournie au régulateur de vitesse VR).

Lorsque le capteur de télémétrie CA fournit l'estimation de la vitesse relative VR, le module de traitement MT est chargé d'estimer la vitesse VI2 du second véhicule VA2 en soustrayant la vitesse relative VR de la vitesse VI1 du premier véhicule VA1.

De préférence, le temps inter-véhicules de consigne TC n'intervient qu'indirectement dans le calcul de la correction de vitesse CV. En effet, il peut servir à calculer la valeur d'un paramètre qui varie en fonction de la vitesse VI1 du premier véhicule VA1 ou de la vitesse VI2 du second véhicule VA2, à savoir la distance inter-véhicules de consigne DIC. Par exemple, la distance inter-véhicules de consigne DIC et le temps inter-véhicules de consigne TC sont liés par la relation DIC = TC * VI1. Le temps inter-véhicules de consigne TC est de préférence fixé par la loi. Mais, on pourrait envisager qu'il soit fixé par le conducteur (au moins à l'intérieur d'un intervalle prédéterminé sensiblement centré sur une valeur légale). A titre d'exemple illustratif, on peut par exemple choisir le temps inter-véhicules de consigne TC égal à 2 secondes. On notera que l'on pourrait envisager plusieurs intervalles de vitesse associés chacun à une valeur spécifique de temps inter-véhicules de consigne TC.

Le module de traitement MT peut prendre en compte au moins un paramètre complémentaire pour calculer la correction de vitesse CV. Ainsi, il peut par exemple utiliser un paramètre de décélération Gm qui représente l'aptitude du régulateur de vitesse RV à faire varier la vitesse VI1 du premier véhicule VA1. Si la décélération n'est réalisée par le régulateur de vitesse RV que par une action sur le moteur, Gm peut par exemple être choisi dans l'intervalle [0,3 $m/s^2$, 0,5 $m/s^2$]. On notera que d'autres valeurs peuvent être choisies pour le paramètre Gm si le régulateur de vitesse RV agit sur les freins du premier véhicule VA1, ou bien à la fois sur le moteur et les freins du premier véhicule VA1.

A titre d'exemple non limitatif, le module de traitement MT peut calculer la correction de vitesse CV au moyen de la formule $CV = VI2 - VC + Signe(DIV - DIC) * \sqrt{2 * Gm * |DIV - DIC|}$ , où les fonctions « Signe » et « | | » désignent respectivement le signe algébrique et la valeur absolue du résultat de la soustraction entre la distance inter-véhicules DIV et la distance inter-véhicules de consigne DIC.

Une fois que le module de traitement MT a calculé une correction de vitesse CV, il détermine une vitesse de consigne corrigée VCC en fonction de cette correction de vitesse calculée CV. Pour ce faire, il peut par exemple additionner la correction de vitesse CV à la vitesse de consigne VC.

On notera que l'on peut éventuellement contraindre le module de traitement MT à ne calculer que des corrections de vitesse CV comprises dans un intervalle limité par des bornes inférieure (BI) et supérieure (BS) choisies. En d'autres termes, on se contraint à moduler la correction de vitesse CV sur une plage limitée par rapport à la vitesse de consigne VC.

Par exemple, la borne inférieure BI peut être égale à environ -20 km/h et la borne supérieure BS peut être égale à 0 km/h. Dans ce cas, une fois que le module de traitement MT a calculé une correction de vitesse CV, il compare cette dernière aux bornes inférieure BI et supérieure BS choisies, et, lorsque la correction de vitesse CV est inférieure à la borne inférieure BI, il remplace la correction de vitesse CV par cette borne inférieure BI, tandis que lorsque la correction de vitesse CV est supérieure à la borne supérieure BS, il remplace la correction de vitesse CV par cette borne supérieure BS.

Une fois que le module de traitement MT a calculé une vitesse de consigne corrigée VCC, il la délivre sur une sortie, à destination du (de son) régulateur de vitesse RV. Ce dernier l'utilise alors pour réguler la vitesse du premier véhicule VA1 de manière à ce qu'elle permette de respecter le temps inter-véhicules de consigne TC.

Il est important de noter qu'après avoir calculé une première correction de vitesse CV consécutivement à l'apparition du second véhicule VA2 devant le premier véhicule VA1, le module de traitement MT peut être éventuellement configuré de manière à ne pas immédiatement délivrer une vitesse de consigne corrigée VCC égale à la somme de la correction de vitesse CV et de la vitesse de consigne VC. En effet, on peut envisager que le module de traitement MT délivre successivement au régulateur de vitesse RV des vitesses de consigne VCC dont la correction augmente progressivement jusqu'à atteindre la valeur de la première correction de vitesse CV. Par exemple (et non limitativement), le module de traitement MT peut délivrer une première vitesse de consigne corrigée VCC égale à VC+(CV/3), puis une deuxième vitesse de consigne corrigée VCC égale à VC+(2CV/3), et une troisième vitesse de consigne corrigée VCC égale à VC+CV. Cela permet en effet d'éviter que le régulateur de vitesse RV fasse varier de façon trop brusque la vitesse du premier véhicule VA1.

De même, lorsque le module de traitement MT s'aperçoit que le second véhicule VA2 n'est plus placé devant le premier véhicule VA1 (par exemple du fait que subitement le capteur de télémétrie CA ne délivre plus de mesure de distance inter-véhicules DIV), on peut envisager qu'il soit configuré de manière à ne pas immédiatement délivrer une vitesse de consigne corrigée VCC égale à la seule vitesse de consigne VC. Dans ce cas, le module de traitement MT peut par exemple délivrer successivement au régulateur de vitesse RV des vitesses de consigne VCC dont la correction diminue progressivement jusqu'à atteindre la valeur de la vitesse de consigne VC. Par exemple (et non limitativement), le module de traitement MT peut délivrer une première vitesse de consigne corrigée VCC égale à VC+(2CV'/3), puis une deuxième vitesse de consigne corrigée VCC égale à VC+(CV'/3), et une troisième vitesse de consigne corrigée VCC égale à VC. CV' désigne ici la dernière valeur de correction de vitesse CV déterminée par le module de traitement MT. Cela permet en effet d'éviter que le régulateur de vitesse RV fasse varier de façon trop brusque la vitesse du premier véhicule VA1.

Comme cela est illustré sur les figures 1 et 2, le dispositif D peut éventuellement comprendre un module de contrôle d'activation MA comprenant au moins un premier sous-module chargé d'autoriser l'activation du régulateur de vitesse RV dans deux situations.

Une première situation concerne les cas dans lesquels il n'y a pas de second véhicule VA2 devant le premier véhicule VA1. Dans ces cas, on comprendra que rien ne fait obstacle au fonctionnement classique du régulateur de vitesse RV, c'est-à-dire avec une vitesse de consigne VC non corrigée.

Une seconde situation concerne les cas dans lesquels un second véhicule VA2 est placé devant le premier véhicule VA1 et deux conditions sont satisfaites. La première condition impose que la vitesse VI2 estimée du second véhicule VA2 soit supérieure à la différence entre la vitesse de consigne VC et une vitesse seuil choisie VS (soit VI2 > VC - VS). La seconde condition impose que le temps inter-véhicules TIV soit supérieur à un temps seuil choisi TS (soit TIV > TS).

Par exemple, la vitesse seuil VS peut être égale à la valeur absolue de la borne inférieure BI de l'intervalle dans lequel peut varier la correction de vitesse CV, soit VS = |BI|, ce qui donne comme condition sur VI2 : VI2 > VC - |BI|.

Par exemple, le temps seuil TS peut être choisi égal à environ 1 seconde.

On notera que la seconde condition peut être éventuellement renforcée par une sous-condition complémentaire imposant que le temps inter-véhicules TIV ne soit pas inférieur au temps inter-véhicules de consigne TC pendant plus d'une durée seuil DS choisie. En d'autres termes on ne peut pas activer la régulation de vitesse si le temps inter-véhicules TIV est inférieur au temps inter-véhicules de consigne TC pendant plus de la durée seuil DS. Par exemple, la durée seuil DS peut être choisie égale à environ 5 secondes.

Ainsi, on n'autorise l'activation du régulateur de vitesse RV qu'à condition que la vitesse VI2 du second véhicule (suivi) VA2 ne soit pas trop inférieure à la vitesse de consigne VC et que le temps inter-véhicules TIV ne soit pas trop faible.

Comme illustré, le module de contrôle d'activation MA peut éventuellement et également comprendre un second sous-module chargé de désactiver le régulateur de vitesse RV lorsque l'une au moins des deux conditions précitées n'est pas entièrement satisfaite. En d'autres termes, lorsque le régulateur de vitesse RV a été activé, chaque fois que le second sous-module du module de contrôle d'activation MA détecte que la vitesse estimée VI2 du second véhicule VA2 est inférieure à la différence entre la vitesse de consigne VC et la vitesse seuil VS (soit VI2 < VC - VS) et/ou que le temps inter-véhicules TIV est inférieur au temps seuil TS (soit TIV < TS) et/ou que le temps inter-véhicules TIV est inférieur au temps inter-véhicules de consigne TC pendant plus de la durée seuil DS (soit TIV < TC pendant plus de DS), alors il ordonne la désactivation du régulateur de vitesse RV.

Ainsi, on désactive automatiquement la régulation de vitesse lorsqu'un second véhicule VA2 trop lent apparaît devant le premier véhicule (suiveur) VA1 ou est susceptible de rester trop près du premier véhicule VA1 pendant trop longtemps.

On notera que le second sous-module peut être agencé dé manière à alerter le conducteur en cas de désactivation de la régulation de vitesse. Tout type d'alerte peut être envisagé, et notamment l'émission d'un signal sonore dédié et/ou l'affichage d'un message sur un écran. Ainsi, on peut envisager de proposer au conducteur de valider une nouvelle vitesse de consigne VC mieux adaptée au trafic. Une telle validation peut par exemple se faire via l'actionneur d'activation couplé au premier sous-module (voir figure 2).

On notera également que la désactivation de la régulation de vitesse peut être soit définitive (ce qui implique que le conducteur devra reprogrammer la vitesse de consigne s'il veut réutiliser le régulateur de vitesse RV), soit temporaire (ce qui implique que le conducteur peut à tout moment tenter de la désinhiber pour réutiliser le régulateur de vitesse RV avec la vitesse de consigne VC précédemment définie).

On notera également, comme illustré sur la figure 2, que l'on peut toujours utiliser les actions classiques de désactivation du régulateur de vitesse RV que sont l'utilisation des freins et l'utilisation de l'actionneur de désactivation du régulateur de vitesse RV.

On notera également que l'on peut également envisager une inhibition de la fonction de désactivation (ou une désinhibition de la désactivation) du régulateur de vitesse RV lorsque le conducteur accélère et/ou lorsqu'il actionne le clignotant gauche pour signaler qu'il va changer de file pour doubler le second véhicule VA2 qui le précède. La reprise de l'activation du régulateur de vitesse RV, consécutivement à une désactivation temporaire (ou inhibition), peut par exemple se faire au moyen de l'actionneur d'activation du régulateur de vitesse RV, lequel est couplé au premier sous-module (voir figure 2).

Le dispositif de contrôle D selon l'invention, et notamment son module de traitement MT ainsi que son éventuel module de contrôle d'activation, peut être réalisé sous la forme de circuits électroniques, de modules logiciels (ou informatiques), ou d'une combinaison de circuits et de logiciels.

L'invention peut être également vue sous l'angle d'un procédé, dédié au contrôle du fonctionnement d'un régulateur de vitesse RV d'un premier véhicule VA1, et pouvant par exemple être mis en oeuvre par un dispositif de contrôle D du type de celui décrit ci-avant. Ce procédé reprenant les fonctionnalités principales et auxiliaires présentées ci-avant, seule sa combinaison de fonctionnalités principales est présentée ci-dessous.

Ce procédé consiste :

- à estimer la distance inter-véhicules DIV qui sépare le premier véhicule VA1 d'un second véhicule VA2 qui le précède et la vitesse VI2 du second véhicule VA2,
- à calculer une correction de vitesse CV à apporter à une vitesse de consigne VC du régulateur de vitesse RV en fonction au moins de cette vitesse de consigne VC, d'un temps inter-véhicules de consigne TC, de la distance inter-véhicules estimée DIV et de la vitesse estimée VI2 du second véhicule VA2, et
- à délivrer pour le régulateur de vitesse RV une vitesse de consigne VCC corrigée en fonction de la correction de vitesse calculée CV.

L'invention est particulièrement avantageuse car elle ne modifie pas le fonctionnement du régulateur de vitesse du fait qu'elle ne fait que moduler la vitesse de consigne qui est utilisée par ce dernier.

L'invention ne se limite pas aux modes de réalisation de dispositif et de procédé de contrôle et de régulateur de vitesse décrits ci-avant, seulement à titre d'exemple, mais elle englobe toutes les variantes que pourra envisager l'homme de l'art dans le cadre des revendications ci-après.

## Revendications

1. Procédé de contrôle du fonctionnement d'un, régulateur de vitesse (RV) d'un premier véhicule (VA1), consistant i) à estimer la distance inter-véhicules (DIV) séparant ledit premier véhicule (VA1) d'un second véhicule qui le précède (VA2) et la vitesse (VI2) dudit second véhicule (VA2), ii) à calculer une correction de vitesse (CV) à apporter à une vitesse de consigne (VC) dudit régulateur de vitesse (RV) en fonction au moins de cette vitesse de consigne (VC), d'un temps inter-véhicules de consigne (TC), de la distance inter-véhicules estimée (DIV) et de la vitesse estimée (VI2) du second véhicule (VA2), et iii) à délivrer pour ledit régulateur de vitesse (RV) une vitesse de consigne corrigée en fonction de ladite correction de vitesse calculée (CV), **caractérisé en ce qu'**après avoir calculé ladite correction de vitesse (CV) on la compare à un intervalle limité par des bornes inférieure et supérieure choisies, et lorsque ladite correction de vitesse (CV) est inférieure à ladite borne inférieure on la remplace par cette borne inférieure, tandis que lorsque ladite correction de vitesse (CV) est supérieure à ladite borne supérieure on la remplace par cette borne supérieure, et **en ce que** l'intervalle limité est inférieur ou égal à 30 km/h, voire à 20 km/h.

2. Procédé selon la revendication 1, **caractérisé en ce que** l'on calcule une distance inter-véhicules de consigne (DIC) en fonction dudit temps inter-véhicules de consigne (TC) et de la vitesse (VI1) dudit premier véhicule (VA1), et on calcule ladite correction de vitesse (CV) en fonction au moins de ladite vitesse de consigne (VC), de ladite distance inter-véhicules de consigne (DIC), de la distance inter-véhicules estimée (DIV) et de la vitesse estimée (VI2) du second véhicule (VA2).

3. Procédé selon l'une des revendications 1 et 2, **caractérisé en ce que** l'on calcule ladite correction de vitesse (CV) en fonction, également, d'un paramètre de décélération (Gm) représentatif de l'aptitude dudit régulateur de vitesse (RV) à faire varier la vitesse (VI1) dudit premier véhicule (VA1).

4. Procédé selon la combinaison des revendications 2 et 3, **caractérisé en ce que** l'on calcule ladite correction de vitesse (CV) au moyen de la formule $CV = VI2 - VC + Signe(DIV - DIC) * \sqrt{2 * Gm * |DIV - DIC|}$ ;

avec DIV la distance inter-véhicules séparant ledit premier véhicule (VA1) d'un second véhicule qui le précède (VA2), VI2 la vitesse dudit second véhicule (VA2), CV la correction de vitesse à apporter à VC la vitesse de consigne dudit régulateur de vitesse (RV), DIC la distance inter-véhicule de consigne, Gm paramètre de décélération.

5. Procédé selon l'une quelconque des revendications précédentes, **caractérisé en ce que** ladite borne supérieure est égale à 0 km/h.

6. Procédé selon la revendication 5, **caractérisé en ce que** ladite borne inférieure est égale à environ -20 km/h et ladite borne supérieure est égale à 0 km/h.

7. Procédé selon l'une des revendications précédentes, **caractérisé en ce que** lorsque ledit second véhicule (VA2) n'est plus placé devant ledit premier véhicule (VA1) on diminue progressivement ladite correction de vitesse (CV) jusqu'à une valeur nulle.

8. Procédé selon l'une des revendications précédentes, **caractérisé en ce que** lorsque la distance inter-véhicule (DIC) devient supérieure à un seuil donné, on diminue progressivement ladite correction de vitesse (CV) jusqu'à une valeur nulle.

9. Procédé selon l'une des revendications précédentes, **caractérisé en ce que** lorsque la différence entre la vitesse du second véhicule (VI2) et la vitesse (VI1) du premier véhicule devient supérieure à un seuil donné, on diminue progressivement ladite correction de vitesse (CV) jusqu'à une valeur nulle.

10. Procédé selon l'une des revendications précédentes, **caractérisé en ce qu'**après avoir calculé une première correction de vitesse (CV) consécutivement à l'apparition dudit second véhicule (VA2) devant ledit premier véhicule (VA1), on délivre successivement audit régulateur de vitesse (RV) des vitesses de consigne dont la correction augmente progressivement jusqu'à atteindre la valeur de ladite première correction de vitesse (CV).

11. Procédé selon l'une des revendications précédentes, **caractérisé en ce que** l'on estime ladite vitesse (VI2) du second véhicule (VA2) à partir de ladite vitesse (VI1) du premier véhicule (VA1) et d'une valeur représentative de la vitesse relative dudit second véhicule (VA2) par rapport audit premier véhicule (VA1).

12. Procédé selon l'une des revendications précédentes, **caractérisé en ce que** l'on autorise l'activation dudit régulateur de vitesse (RV) lorsqu'il n'y a pas de second véhicule (VA2) devant ledit premier véhicule (VA1) ou qu'un second véhicule (VA2) est placé devant ledit premier véhicule (VA1) et, d'une part, que la vitesse estimée (VI2) du second véhicule (VA2) est supérieure à la différence entre ladite vitesse de consigne (VC) et une vitesse seuil choisie, et d'autre part, que le temps inter-véhicules (TIV) est supérieur à un temps seuil choisi.

13. Procédé selon la revendication 12, **caractérisé en ce qu'**en présence d'un second véhicule (VA2) placé devant ledit premier véhicule (VA1), on autorise l'activation dudit régulateur de vitesse (RV) si, en outre, ledit temps inter-véhicules (TIV) n'est pas inférieur audit temps inter-véhicules de consigne (TC) pendant plus d'une durée seuil choisie.

14. Procédé selon la revendication 12, **caractérisé en ce qu'**en présence d'un second véhicule (VA2) placé devant ledit premier véhicule (VA1), on autorise l'activation dudit régulateur de vitesse (RV) si, en outre, ledit temps inter-véhicules (TIV) n'est pas inférieur à un temps inter-véhicules de sécurité pendant plus d'une durée seuil choisie.

15. Procédé selon l'une des revendications précédentes, **caractérisé en ce que** lorsque ledit régulateur de vitesse (RV) est activé et qu'un second véhicule (VA2) apparaît devant ledit premier véhicule (VA1) avec une vitesse estimée (VI2) inférieure à ladite vitesse de consigne (VC), on désactive ledit régulateur de vitesse (RV) lorsque ladite vitesse estimée (VI2) du second véhicule (VA2) est inférieure à la différence entre ladite vitesse de consigne (VC) et une vitesse seuil choisie et/ou que le temps inter-véhicules (TIV) est inférieur à un temps seuil choisi et/ou que ledit temps inter-véhicules (TIV) est inférieur audit temps inter-véhicules de consigne (TC) pendant plus d'une durée seuil choisie.

**Claims**

1. Method for controlling the operation of a cruise control (RV) of a first vehicle (VA1), consisting i) in estimating the inter-vehicle distance (DIV) separating said first vehicle (VA1) from a second vehicle (VA2) which precedes it and the speed (VI2) of said second vehicle (VA2), ii) in calculating a speed correction (CV) to be applied to a setpoint speed (VC) of said cruise control (RV) based on at least this setpoint speed (VC), an inter-vehicle setpoint time (TC), the estimated inter-vehicle distance (DIV) and the estimated speed (VI2) of the second vehicle (VA2), and iii) in supplying for said cruise control (RV) a corrected setpoint speed based on said calculated speed correction (CV), **characterised in that** after having calculated said speed correction (CV) it is compared to an interval that is limited by selected lower and upper limits, and when said speed correction (CV) is less than said lower limit it is replaced with this lower limit, while when said speed correction (CV) is greater than said upper limit it is replaced with this upper limit, and **in that** the limited interval is less than or equal to 30 km/h, or even 20 km/h.

2. Method according to claim 1, **characterised in that** an inter-vehicle setpoint distance (DIC) is calculated based on said inter-vehicle setpoint time (TC) and the speed (VI1) of said first vehicle (VA1), and said speed correction (CV) is calculated based on at least said setpoint speed (VC), said inter-vehicle setpoint distance (DIC), the estimated inter-vehicle distance (DIV) and the estimated speed (VI2) of the second vehicle (VA2).

3. Method according to either claim 1 or claim 2, **characterised in that** said speed correction (CV) is calculated based on, also, a deceleration parameter (Gm) representing the aptitude of said cruise control (RV) to vary the speed (VI1) of said first vehicle (VA1).

4. Method according to the combination of claims 2 and 3, **characterised in that** said speed correction (CV) is calculated using the formula CV = VI2 - VC + Sign(DIV - DIC)* $\sqrt{2}$* Gm * |DIV - DIC|; where DIV is the inter-vehicle distance separating said first vehicle (VA1) from a second vehicle (VA2) which precedes it, VI2 is the speed of said second vehicle (VA2), CV is the speed correction to be applied to the setpoint speed (VC) of said cruise control (RV), DIC is the inter-vehicle setpoint distance, and Gm is the deceleration parameter.

5. Method according to any one of the preceding claims, **characterised in that** said upper limit is equal to 0 km/h.

6. Method according to claim 5, **characterised in that** said lower limit is equal to approximately -20 km/h and said upper limit is equal to 0 km/h.

7. Method according to any one of the preceding claims, **characterised in that** when said second vehicle (VA2) is no longer positioned in front of said first vehicle (VA1) said speed correction (CV) is decreased progressively to a value of zero.

8. Method according to any one of the preceding claims, **characterised in that** when the inter-vehicle distance (DIC) exceeds a given threshold said speed correction (CV) is decreased progressively to a value of zero.

9. Method according to any one of the preceding claims, **characterised in that** when the difference between the speed of the second vehicle (VI2) and the speed (VI1) of the first vehicle exceeds a given threshold, said speed correction (CV) is decreased progressively to a value of zero.

10. Method according to any one of the preceding claims, **characterised in that** after having calculated a first speed correction (CV) as a result of the appearance of said second vehicle (VA2) in front of said first vehicle (VA1), setpoint speeds are supplied successively to said cruise control (RV), the correction of which setpoint speeds increases progressively until the value of said first speed correction (CV) is reached.

11. Method according to any one of the preceding claims, **characterised in that** said speed (VI2) of the second vehicle (VA2) is estimated using said speed (VI1) of the first vehicle (VA1) and a value representing the relative speed of said second vehicle (VA2) in relation to said first vehicle (VA1).

12. Method according to any one of the preceding claims, **characterised in that** the activation of said cruise control (RV) is authorised when there is not a second vehicle (VA2) in front of said first vehicle (VA1) or when a second vehicle (VA2) is positioned in front of said first vehicle (VA1) and, on the one hand, the estimated speed (VI2) of the second vehicle (VA2) is higher than the difference between said setpoint speed (VC) and a selected threshold speed and, on the other hand, the inter-vehicle time (TIV) is greater than a selected threshold time.

13. Method according to claim 12, **characterised in that** when a second vehicle (VA2) is positioned in front of said first vehicle (VA1), the activation of said cruise control (RV) is authorised if, furthermore, said inter-vehicle time (TIV) is not less than said inter-vehicle setpoint time (TC) for more than a selected threshold duration.

14. Method according to claim 12, **characterised in that** when a second vehicle (VA2) is positioned in front of said first vehicle (VA1), the activation of said cruise control (RV) is authorised if, furthermore, said inter-vehicle time (TIV) is not less than an inter-vehicle safety time for more than a selected threshold duration.

15. Method according to any one of the preceding claims, **characterised in that** when said cruise control (RV) is activated and a second vehicle (VA2) appears in front of said first vehicle (VA1) with an estimated speed (VI2) which is less than said setpoint speed (VC), said cruise control (RV) is deactivated when said estimated speed (VI2) of the second vehicle (VA2) is less than the difference between said setpoint speed (VC) and a selected threshold speed and/or when the inter-vehicle time (TIV) is less than a selected threshold time and/or when said inter-vehicle time (TIV) is less than said inter-vehicle setpoint time (TC) for more than a selected threshold duration.

**Patentansprüche**

1. Verfahren zur Kontrolle der Funktion einer Geschwindigkeitsregelanlage (RV) eines ersten Fahrzeugs (VA1), bestehend aus i) der Schätzung des Abstands zwischen den Fahrzeugen (DIV), der das erste Fahrzeug (VA1) von einem vor ihm fahrenden zweiten Fahrzeug (VA2) trennt, und der Geschwindigkeit (VI2) des zweiten Fahrzeugs (VA2), ii) der Berechnung einer Geschwindigkeitskorrektur (CV), die auf eine Sollgeschwindigkeit (VC) der Geschwindigkeitsregelanlage (RV) anzuwenden ist, mindestens abhängig von dieser Sollgeschwindigkeit (VC), einer Sollzeit (TC) zwischen den Fahrzeugen, dem geschätzten Abstand zwischen den Fahrzeugen (DIV) und der geschätzten Geschwindigkeit (VI2) des zweiten Fahrzeugs (VA2), und iii) der Bereitstellung einer abhängig von der berechneten Geschwindigkeitskorrektur (CV) korrigierten Sollgeschwindigkeit für die Geschwindigkeitsregelanlage (RV), **dadurch gekennzeichnet, dass** die Geschwindigkeitskorrektur (CV) nach ihrer Berechnung mit einem Intervall verglichen wird, das durch gewählte obere und untere Schranken begrenzt wird, und wenn die Geschwindigkeitskorrektur (CV) kleiner ist als die untere Schranke, sie durch diese untere Schranke ersetzt wird, während wenn die Geschwindigkeitskorrektur (CV) größer ist als die obere Schranke, sie durch diese obere Schranke ersetzt wird, und **dadurch**, dass das begrenzte Intervall kleiner oder gleich 30 km/h, sogar 20 km/h ist.

2. Verfahren nach Anspruch 1, **dadurch gekennzeichnet, dass** ein Sollabstand (DIC) zwischen den Fahrzeugen abhängig von der Sollzeit (TC) zwischen den Fahrzeugen und der Geschwindigkeit (VI1) des ersten Fahrzeugs (VA1) berechnet wird und dass die Geschwindigkeitskorrektur (CV) mindestens abhängig von der Sollgeschwindigkeit (VC), dem Sollabstand (DIC) zwischen den Fahrzeugen, dem geschätzten Abstand zwischen den Fahrzeugen (DIV) und der geschätzten Geschwindigkeit (VI2) des zweiten Fahrzeugs (VA2) berechnet wird.

3. Verfahren nach einem der Ansprüche 1 und 2, **dadurch gekennzeichnet, dass** die Geschwindigkeitskorrektur (CV) ebenfalls abhängig von einem Verzögerungsparameter (Gm) berechnet wird, der für die Fähigkeit der Geschwindigkeitsregelanlage (RV), die Geschwindigkeit (VI1) des ersten Fahrzeuges (VA1) zu variieren, repräsentativ ist.

4. Verfahren nach einer Kombination der Ansprüche 2 und 3, **dadurch gekennzeichnet, dass** die Geschwindigkeitskorrektur (CV) mit der Formel $CV = VI2 - VC + sgn(DIV - DIC) * \sqrt{2 * Gm * |DIV - DIC|}$ berechnet wird; wobei DIV der Abstand zwischen den Fahrzeugen, der das erste Fahrzeug (VA1) von einem vor ihm fahrenden zweiten Fahrzeug (VA2) trennt, VI2 die Geschwindigkeit des zweiten Fahrzeugs (VA2), CV die Geschwindigkeitskorrektur, die auf VC, die Sollgeschwindigkeit der Geschwindigkeitsregelanlage (RV), anzuwenden ist, DIC der Sollabstand zwischen den Fahrzeugen und Gm der Verzögerungsparameter ist.

5. Verfahren nach einem der vorhergehenden Ansprüche, **dadurch gekennzeichnet, dass** die obere Schranke gleich 0 km/h ist.

6. Verfahren nach Anspruch 5, **dadurch gekennzeichnet, dass** die untere Schranke ungefähr gleich -20 km/h und die obere Schranke gleich 0 km/h ist.

7. Verfahren nach einem der vorhergehenden Ansprüche, **dadurch gekennzeichnet, dass**, wenn das zweite Fahrzeug (VA2) nicht mehr vor dem ersten Fahrzeug (VA1) platziert ist, die Geschwindigkeitskorrektur (CV) schrittweise auf einen Nullwert reduziert wird.

8. Verfahren nach einem der vorhergehenden Ansprüche, **dadurch gekennzeichnet, dass**, wenn der Sollabstand zwischen den Fahrzeugen (DIC) größer als eine gegebene Schwelle wird, die Geschwindigkeitskorrektur (CV) schrittweise auf einen Nullwert reduziert wird.

9. Verfahren nach einem der vorhergehenden Ansprüche, **dadurch gekennzeichnet, dass**, wenn die Differenz zwischen der Geschwindigkeit (VI2) des zweiten Fahrzeugs und der Geschwindigkeit (VI1) des ersten Fahrzeugs größer als eine gegebene Schwelle wird, die Geschwindigkeitskorrektur (CV) schrittweise auf einen Nullwert reduziert wird.

10. Verfahren nach einem der vorhergehenden Ansprüche, **dadurch gekennzeichnet, dass**, nachdem eine erste Geschwindigkeitskorrektur (CV) in Folge des Erscheinens des zweiten Fahrzeugs (VA2) vor dem ersten Fahrzeug (VA1) durchgeführt wurde, sukzessiv Sollgeschwindigkeiten an die Geschwindigkeitsregelanlage (RV) geliefert werden, deren Korrektur schrittweise erhöht wird, bis der Wert der ersten Geschwindigkeitskorrektur (CV) erreicht wird.

11. Verfahren nach einem der vorhergehenden Ansprüche, **dadurch gekennzeichnet, dass** die Geschwindigkeit (VI2) des zweiten Fahrzeugs (VA2) ausgehend von der Geschwindigkeit (VI1) des ersten Fahrzeugs (VA1) und einem Wert, der für die relative Geschwindigkeit des zweiten Fahrzeugs (VA2) in Bezug auf das erste Fahrzeug (VA1) repräsentativ ist, geschätzt wird.

12. Verfahren nach einem der vorhergehenden Ansprüche, **dadurch gekennzeichnet, dass** die Aktivierung der Geschwindigkeitsregelanlage (RV) zugelassen wird, wenn sich kein zweites Fahrzeug (VA2) vor dem ersten Fahrzeug (VA1) befindet oder wenn ein zweites Fahrzeug (VA2) vor dem ersten Fahrzeug (VA1) platziert ist und einerseits die geschätzte Geschwindigkeit (VI2) des zweiten Fahrzeugs (VA2) größer ist als die Differenz zwischen der Sollgeschwindigkeit (VC) und einem gewählten Geschwindigkeitsschwellwert, und andererseits die Zeit zwischen den Fahrzeugen (TIV) größer ist als ein gewählter Zeitschwellwert.

13. Verfahren nach Anspruch 12, **dadurch gekennzeichnet, dass** bei Anwesenheit eines zweiten Fahrzeugs (VA2), das vor dem ersten Fahrzeug (VA1) platziert ist, die Aktivierung der Geschwindigkeitsregelanlage (RV) zugelassen wird, wenn ferner die Zeit zwischen den Fahrzeugen (TIV) nicht geringer ist als die Sollzeit (TC) zwischen den Fahrzeugen, und zwar über eine gewählte Schwellwertdauer hinaus.

14. Verfahren nach Anspruch 12, **dadurch gekennzeichnet, dass** bei Anwesenheit eines zweiten Fahrzeugs (VA2), das vor dem ersten Fahrzeug (VA1) platziert ist, die Aktivierung der Geschwindigkeitsregelanlage (RV) zugelassen wird, wenn ferner die Zeit zwischen den Fahrzeugen (TIV) nicht geringer ist als eine Sicherheitszeit zwischen den Fahrzeugen, und zwar über eine gewählte Schwellwertdauer hinaus.

15. Verfahren nach einem der vorhergehenden Ansprüche, **dadurch gekennzeichnet, dass**, während die Geschwindigkeitsregelanlage (RV) aktiviert ist und ein zweites Fahrzeug (VA2) vor dem ersten Fahrzeug (VA1) mit einer geschätzten Geschwindigkeit (VI2) erscheint, die kleiner ist als die Sollgeschwindigkeit (VC), die Geschwindigkeitsregelanlage (RV) deaktiviert wird, wenn die geschätzte Geschwindigkeit (VI2) des zweiten Fahrzeugs (VA2) kleiner ist als die Differenz zwischen der Sollgeschwindigkeit (VC) und einem gewählten Geschwindigkeitsschwellwert und/oder die Zeit zwischen den Fahrzeugen (TIV) kleiner ist als ein gewählter Zeitschwellwert und/oder die Zeit zwischen den Fahrzeugen (TIV) kleiner ist als die Sollzeit (TC) zwischen den Fahrzeugen, und zwar über eine gewählte Schwellwertdauer hinaus

FIG.1

FIG.2

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2888536

- EP 1504948 A